# EUROPÄISCHE PATENTANMELDUNG

(11) **EP 0 526 723 A1**
(43) Veröffentlichungstag der Anmeldung: **10.02.1993**
(21) Anmeldenummer: 92110462.6
(22) Anmeldetag: 20.06.1992
(51) Int. Cl.: F16L 1/08, B25B 27/02

(54) **Vorrichtung zum Auseinanderziehen steckverbundener Rohrkörper, wie Auspuffrohren an Kraftfahrzeugen**

(30) Priorität: 03.07.1991 CH 1972/91
(71) Anmelder: Zürcher, Hans, CH-5034 Suhr (CH)
(72) Erfinder: Zürcher, Hans, CH-5034 Suhr (CH)
(74) Vertreter: Ballmer, Ulrich

(57) **Zusammenfassung**

Eine Vorrichtung, mit der steckverbundene Rohrkörper (1 und 2), wie Auspuffrohre an Kraftfahrzeugen auseinandergezogen werden können. Ein, fest mit dem einen der beiden Rohrkörper (2) verbind- und verriegelbarer Tragschlitten (5) ist längsverschieblich und reversierend antreibbar in einem Tragrahmen (6) geführt; der andere Rohrkörper (1) ist mit diesem Tragrahmen (6) verbindund verriegelbar. Tragschlitten (5) und Tragrahmen (6) sind dabei ineinander teleskopgeführt.

## Beschreibung

Die Erfindung bezieht sich auf eine Vorrichtung zum Auseinanderziehen steckverbundener Rohrkörper, wie Auspuffrohren aus Kraftfahrzeugen.

Das Auseinanderziehen solcher Rohrkörper, die im Steckbereich durch Rost und andere äußere Einflüsse meist fest miteinander verbacken sind, wird in der Regel manuell durchgeführt und bringt dabei häufig erhebliche Schwierigkeiten mit sich; es setzt Erfahrung bei der Arbeit voraus und erfordert einen erheblichen Aufwand an Zeit und Kraft. Hinzu kommt die Gefahr, daß bei der Arbeit an die Rohrkörper angeschlossene andere Bauteile beschädigt werden.

Der Erfindung liegt die Aufgabe zugrunde, diesen Aufwand zu verringern und die Schwierigkeiten sowie die Beschädigungsgefahren zu vermeiden.

Diese Aufgabe wird dadurch gelöst, daß ein, fest mit dem einen der beiden Rohrkörper verbind- und verriegelbarer Tragschlitten längsverschieblich und reversierend antreibbar in einem Tragrahmen geführt wird, und der andere Rohrkörper mit diesem Tragrahmen verbind- und verriegelbar ist.

Die Vorrichtung kann als Ganzes z.B. unter den beiden steckverbundenen Rohrkörpern angebracht und dabei Tragschlitten und Tragrahmen hängend mit den beiden Rohrkörpern verbunden und verriegelt werden. Anschließend kann dann durch das längsverschiebende Auseinanderfahren von Tragschlitten und Tragrahmen eine Zugkraft auf die beiden Rohrkörper aufgebracht werden und ggfs. auch durch Reversieren des Antriebs wieder eine Druckkraft im Sinne des Aufeinanderzubewegens der Rohrkörper und wieder umgekehrt, mit der Folge, daß sich die verbackene Steckverbindung zwischen beiden Rohrkörpern langsam löst und dann beide Rohre ohne weitere Schwierigkeiten durch Auseinanderfahren von Tragschlitten und Rohrkörper voneinander getrennt werden können.

Wie die Erfindung weiter vorsieht, können Tragschlitten und Tragrahmen vorteilhaft so ausgebildet werden, daß sie ineinander teleskopgeführt sind. Dabei kann eine längsmittig im Tragschlitten geführte, im Tragrahmen drehgelagerte Gewindespindel mit Hilfe einer in dem Tragrahmen angeordneten Antriebseinrichtung manuell oder motorisch betätigt werden. Tragschlitten und Tragrahmen können dabei aus Rohrkörpern mit Zylinder- oder Ovalquerschnitt bestehen und die Führung für die Gewindespindel kann aus einer, in den Rohrquerschnitt des Tragschlittens eingesetzten Ringscheibe mit zentraler Gewindebohrung gebildet werden, wobei ein Ende der Gewindespindel in einen, an das freie Ende des Tragrahmens angesetzten Kastenansatz'kragend, ein Zahnrad trägt, das mit einem auf einem, in dem Kastenansatz angeordneten Handkurbeltrieb sitzenden Zahnritzel kämmt. Statt eines Handkurbelantriebs kann auch ein motorischer Antrieb verwendet werden oder anstelle des Spindeltriebes ein druckmittelbetätigter, linearer Reversierantrieb. Auf dem Tragschlitten und dem Tragrahmen können erfindungsgemäß weiter höhenverstell- und festlegbare Tragstützen für die Rohrkörper und um diese herumlegbare Spannketten mit den Tragschlitten bzw. den Tragrahmen unterfassenden Spannelementen verwendet werden. Die Tragstützen können dabei in, auf Tragschlitten und Tragrahmen aufgesetzten zylindrischen Führungshülsen geführt sein, wobei in die Führungshülsen Riegelbolzen einsteckbar sind. Schließlich sieht die Erfindung weiter die Möglichkeit vor, das Lösen der Steckverbindung der beiden Rohrkörper während der Arbeit der Vorrichtung durch am Tragschlitten und/oder am Tragrahmen angeordnete Rüttelaggregate zu unterstützen.

Die Erfindung wird anhand des in der Zeichnung dargestellten Ausführungsbeispiels näher erläutert.

In der Zeichnung zeigen
Fig. 1 die Vorrichtung in der Gesamtansicht in perspektivischer Darstellung,
Fig. 2 eine Einzelheit aus Fig. 1 im Axialschnitt von der Seite gesehen, und
Fig. 3 eine weitere Einzelheit aus Fig. 1 im Radialschnitt in vergrößertem Maßstab.

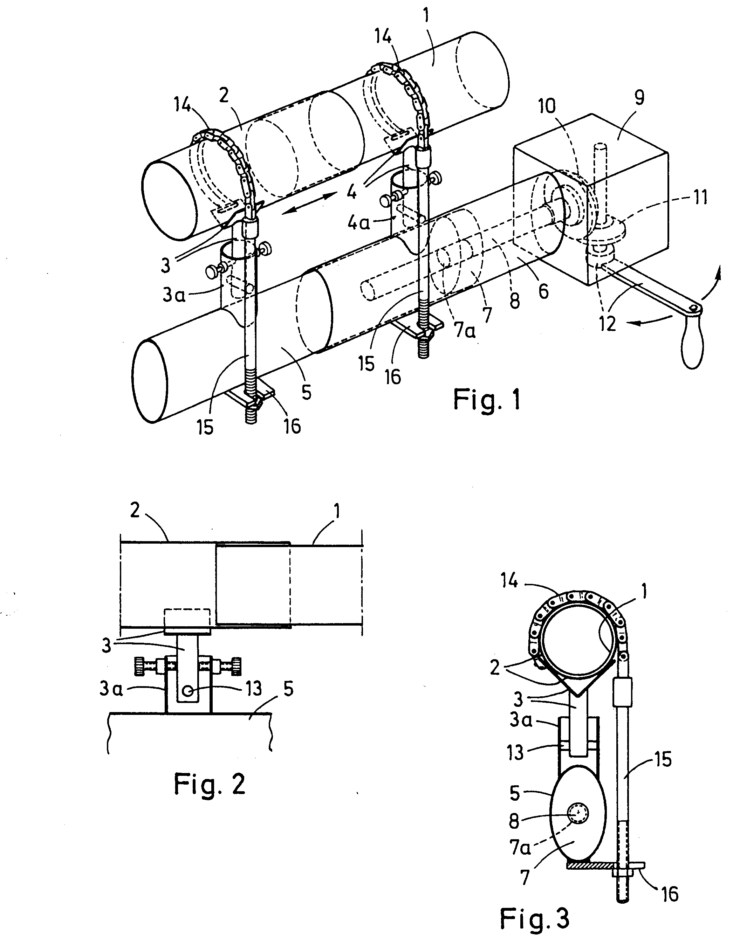

Wie aus Fig. 1 zu ersehen, sind die ineinandergesteckten Rohrkörper 1 und 2 einer nicht dargestellten Auspuffanlage jeweils auf eine Tragstütze 3 bzw. 4 aufgelegt, die, höhenverstellbar in Führungshülsen 3a bzw. 4a stecken, die auf den Tragschlitten 5 bzw. Tragrahmen 6 aufgesetzt und mit diesen fest verbunden sind. Tragschlitten 5 und Tragrahmen 6 bestehen aus teleskopartig ineinander geführten Rohren mit Ovalquerschnitt. In das in dem Tragrahmen 6 geführte Ende des Tragschlittens 5 ist eine Ovalringscheibe 7 eingesetzt, die eine zentrale Gewindebohrung 7a aufweist, in der eine Gewindespindel 8 geführt ist, deren eines Ende in einen an das freie Ende des Tragrahmens 6 angesetzten Kastenansatz kragt und hier ein Zahnkegelrad 10 trägt, das mit einem Zahnkegelradritzel 11 kämmt, das seinerseits auf einem Handkurbeltrieb 12 sitzt.

Die (vgl. Fig. 2) höhenverstellbar und mit Hilfe von Riegelbolzen 13 festlegbaren Tragstützen 3 bzw. 4 dienen den ineinandergesteckten Rohrkörpern 1 bzw. 2 als Auflage. Die Rohrkörper 1 bzw. 2 werden, auf diesen Tragstützen 3 bzw. 4 aufliegend jeweils (Fig. 3) mit Hilfe von Spannketten 14, die um den Außenumfang der Rohrkörper 1, 2 herumlegbar und durch Spannelemente 15, 16 spannbar sind, gegen die Tragstützen 3 bzw. 4 gedrückt und festgehalten. Die Spannelemente unterfassen dabei den Tragschlitten 5 bzw. den Tragrahmen 6.

Durch reversierendes Betätigen des Handkurbeltriebes 12, an dessen Stelle auch ein motorischer Antrieb treten kann, werden entsprechende Kräfte im Sinne des Auseinanderziehens bzw. Gegeneinanderdrückens ggfs. stoßartig auf die beiden Rohrkörper 1 und 2 übertragen und dadurch die mehr oder weniger festgebackene Steckverbindung gelockert, bis sich die Rohrkörper 1 und 2 im Sinne einer axialen Bewegung voneinander weg auseinanderziehen lassen.

Die Spannelemente können auch durch handelsübliche Kettenspannzangen gebildet werden.

## Patentansprüche

1. Vorrichtung zum Auseinanderziehen steckverbundener Rohrkörper, wie Auspuffrohren an Kraftfahrzeugen,
dadurch gekennzeichnet,
daß ein, fest mit dem einen der beiden Rohrkörper (2) verbind- und verriegelbarer Tragschlitten (5) längsverschieblich und reversierend antreibbar in einem Tragrahmen (6) geführt wird, und der andere Rohrkörper (1) mit dem Tragrahmen (6) verbind- und verriegelbar ist.

2. Vorrichtung nach Anspruch 1,
dadurch gekennzeichnet,
daß der Tragschlitten (5) und der Tragrahmen (6) ineinander teleskopgeführt sind.

3. Vorrichtung nach Anspruch 2,
gekennzeichnet durch
eine, längsmittig im Tragschlitten (5) geführte, im Tragrahmen (6) drehgelagerte Gewindespindel (8) und eine in dem Tragrahmen (6) angeordnete, manuell oder motorisch betätigbare Antriebseinrichtung (10, 11, 12).

4. Vorrichtung nach Anspruch 3,
dadurch gekennzeichnet,
daß Tragschlitten (5) und Tragrahmen (6) aus Rohrkörpern mit Zylinder- oder Ovalquerschnitt bestehen.

5. Vorrichtung nach den Ansprüchen 3 und 4,
dadurch gekennzeichnet,
daß die Führung für die Gewindespindel (8) aus einer, in den Rohrquerschnitt des Tragschlittens (5) eingesetzten Ringscheibe (7) mit zentraler Gewindebohrung (7a) besteht, und ein Ende der Gewindespindel (8) in einen, an das freie Ende des Tragrahmens (6) angesetzten Kastenansatz (9) kragend ein Zahnkegelrad (10) trägt, das mit einem, auf einem, in dem Kastenansatz (9) angeordneten Handkurbeltrieb (12) sitzenden Zahnkegelradritzel kämmt.

6. Vorrichtung nach Anspruch 1,
gekennzeichnet durch
einen druckmittelbetätigten linearen Reversierantrieb.

7. Vorrichtung nach Anspruch 1,
gekennzeichnet durch
auf dem Tragschlitten (5) und dem Tragrahmen (6) angeordnete, höhenverstell- und festlegbare Tragstützen (3 bzw. 4) für die Rohrkörper (1 bzw. 2) und um diese herumlegbare Spannketten (14) mit den Tragschlitten (5) bzw. den Tragrahmen (6) unterfassenden Spannelementen (15, 16).

8. Vorrichtung nach Anspruch 7,
dadurch gekennzeichnet,
daß die Tragstützen (3 bzw. 4) in, auf Tragschlitten (5) und Tragrahmen (6) aufgesetzten zylindrischen Führungshülsen (3a bzw. 4a) geführt sind und in die Führungshülsen (3a, 4a Riegelbolzen (13) einsteckbar sind.

9. Vorrichtung nach Anspruch 1,
gekennzeichnet durch
an Tragschlitten (5) und/oder Tragrahmen (6) angeordnete Rüttelaggregate.

10. Vorrichtung nach Anspruch 7,
dadurch gekennzeichnet,
dass die Spannelemente durch an sich bekannte Kettenspannzangen gebildet werden.
